# EUROPÄISCHE PATENTSCHRIFT

(11) **EP 1 507 044 B1**
(45) Veröffentlichungstag und Bekanntmachung des Hinweises auf die Patenterteilung: **29.05.2013**
(21) Anmeldenummer: 04015961.8
(22) Anmeldetag: 07.07.2004
(51) Int. Cl.: E03C 1/04, F16K 27/04, F16L 27/08

(54) **Sanitärarmatur mit Schwenkauslauf**
Sanitary valve with swivelling spout
Robinet sanitaire avec bec verseur pivotant

(30) Priorität: 13.08.2003 DE 10337223
(43) Veröffentlichungstag der Anmeldung: 16.02.2005
(73) Patentinhaber: HANSA METALLWERKE AG, 70567 Stuttgart (DE)
(72) Erfinder: Gänzle, Fritz, 70563 Stuttgart (DE)
(74) Vertreter: Ostertag, Ulrich

(56) Entgegenhaltungen:
- EP-A- 0 496 103
- DE-U- 7 416 418
- US-A- 5 301 715
- US-A- 5 873 387

## Beschreibung

Die Erfindung betrifft eine Sanitärarmatur mit Schwenkauslauf nach dem Oberbegriff des Anspruch 1.

Eine solche Sanitärarmatur ist aus der EP 0 496 103 B1 bekannt. Dort erfolgt die Radiallagerung einer in den Armaturenkörper einsteckbaren Schwenkhülse eines Schwenkauslaufes durch zwei Führungsringe, welche an ihren Mantelflächen, die in Richtung der Schwenkhülse weisen, radial vorstehende, achsparallele Rippen aufweisen. Diese Rippen sind aus einem plastisch verformbaren Material und dienen der spielfreien Lagerung der Schwenkhülse. Bei einem Verschwenken des Schwenkauslaufes gleitet die Schwenkhülse über die axialen Rippen der Führungsringe, wobei sich die Ringe normalerweise nicht gegenüber dem Armaturenkörper drehen. Wenn aus irgendeinem Grunde die Schwenkhülse nicht mehr frei über einen der Führungsringe gleiten kann und dieser bei der Schwenkbewegung mitgenommen wird, kann dies unter ungünstigen Umständen zu einer Erhöhung der erforderlichen Schwenkkraft führen.

Beim Gegenstand der DE 29 48 474 C2 erfolgt die Radiallagerung der Schurenkhülse ebenfalls durch zwei Führungsringe. Zur spielfreien Lagerung ist jeder Ring mit aufspreizbaren, elastischen Federelementen versehen, welche beim Aufschieben des Schwenkhülse auf den Armaturenkörper elastisch komprimiert werden. Derartig elastische Federelemente können auch bei einer Verschwenkung des Schwenkarmes nachgeben, wodurch bei einem Benutzer der Eindruck entstehen kann, dass die radiale Lagerung nicht passgenau ist, was häufig mit einer minderwertigen Qualität in Zusammenhang gebracht wird. Zudem handelt es sich bei solchen Federelementen um recht komplizierte Bauteile, deren Herstellung relativ aufwendig und damit kostspielig ist.

Die EP 0 531 318 B1 beschreibt einen L-förmigen Gleitring, auf dem die Schwenkhülse ruht, welcher aber keine radial vorstehenden Materialerhebungen aufweist. Ein durchgängiger Fixierring besitzt dagegen auf beiden Mantelfächen axiale Rippen. Dabei handelt es sich jedoch um Rastnasen, die der ortsfesten Fixierung einer Abdeckkappe an dem Armaturenkörper dienen. Die Schwenkhülse dreht sich bei Verschwenken um eine glatte umlaufende Fläche dieses Fixierringes. Die Kontaktfläche ist dabei recht groß, wodurch wiederum relative große Reibungskräfte auftreten.

Eine Sanitärarmatur ähnlich derjenigen der EP 0 496 103 B1 geht aus der US 5 301 715 hervor. Dort erfolgt die Lagerung des Schwezzkauslaufs an dessen unterer Fläche mittels eines geschlitzten Lagerrings, dessen unterer Bereich flanschartig verbreitert ist und als Axiallager dient. Im oberen Bereich des Schwenkauslaufs befindet sich ein weiterer Lagerring, der als Radiallager dient welches zur Reduzierung von Abrieb gegenüber dem Schwenkauslauf eine gewisse Toleranz aufweist. Dieser Lagerring ist mittels Vorsprüngen im Armaturenkörper gehalten, so dass er sich nicht drehen kann. Eine spielfreie Lagerung des Schwenkauslaufs ist bei dieser Armatur also nicht möglich, was dem Benutzer ein Gefühl von Verschleiß an der Armatur vermitteln kann.

Aufgabe der vorliegenden Erfindung ist es, eine Sanitäraramtur der eingangs genannten Art so auszugestalten, dass neben einer spielfreien Lagerung eine leichtgängige Schwenkbewegung des Schwenkauslaufes gewährleistet ist.

Diese Aufgabe wird erfindungsgemäß durch die im Anspruch 1 definierten Merkmale gelöst

Die bei einer Verschwenkung des Schwenkarmes auftretenden Reibungskräfte werden erfindungsgemäß besonders in dem Fall reduziert, in dem die Schwenkhülse bei der Schwenkbewegung nicht über den Führungsring gleitet, sondern diese mitnimmt. In diesem Fall kommen die an der inneren Mantelfläche des Führungsringes angeordneten Materialerhebungen zum Tragen, die eine leichtgängige Verschwenkung des Führungsringes gegenüber dem Armaturenkörper ermöglichen. Somit gibt es erfindungsgemäß zwei Möglichkeiten, wie die Schwenkhülse gegenüber dem Armaturenkörper leichtgängig verschwenken kann, was insbesondere bei auftretenden Verschmutzungen von Vorteil ist.

Besonders vorteilhaft ist es, wenn die Materialerhebungen, vorzugsweise der ganze Führungsring, aus einem Kunstoff mit guten Gleiteigenschaften hergestellt wird. Dies verringert zusätzlich die Reibungskräfte.

Bei den Materialerhebungen des Führungsringes kann es sich um Rippen handeln. Vorteilhaft ist es, wenn diese achsparallel verlaufen, da in diesem Falle eine einfache und kostengünstige Herstellung gewährleistet ist. Alternativ können auch diskrete Noppen vorgesehen sein.

Eine gute Radiallagerung wird erzielt, wenn der Führungsring einen im wesentlichen rechteckigen Querschnitt hat.

Es ist vorteilhaft, wenn der Führungsring einen zusätzlichen radial vorstehenden Flansch aufweist. Auf diesem kann die Schwenkhülse axial aufruhen und gegenüber diesem gleiten, wodurch der Führungsring sowohl ein Radial- als auch ein Axiallager bereitstellt.

Eine besonders gute Lagerung wird erzielt, wenn mindestens ein Führungsring, der als Radiallager dient, und mindestens ein Führungsring vorgesehen sind, der als Radial- und Axiallager dient, und die Führungsringe axial voneinander beabstandet sind.

Ein Ausführungsbeispiel der Erfindung wird nachfolgend anhand der Zeichnung erläutert; es zeigen
- Figur 1: einen axialen Schnitt einer Sanitärarmatur mit Schwenkauslauf;
- Figur 2: eine perspektivische Ansicht eines Führungsringes, welcher als Radiallager dient;
- Figur 3: eine Aufsicht des Führungsringes von Figur 2;
- Figur 4: einen Schnitt gemäß Line IV-IV von Figur 3;
- Figur 5: eine perspektivische Ansicht eines Führungsringes, welcher sowohl als Axial- als auch als Radiallager dient;
- Figur 6: eine Aufsicht des Führungsringes von Figur 5; und
- Figur 7: einen Schnitt gemäß Linie VII-VII von Figur 6.

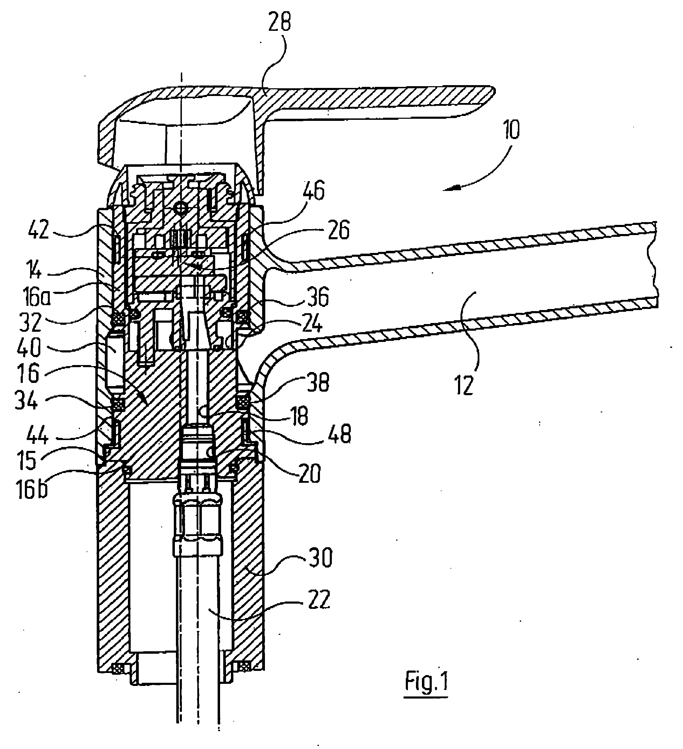

In Figur 1 ist eine Sanitärarmatur 10 dargestellt. Sie weist einen Schwenkauslauf 12 auf, welcher eine Schwenkhülse 14 umfasst.

Die Schwenkhülse 14 hat an ihrem unteren Ende einen größeren Innendurchmesser als der direkt darüber liegende Bereich, wodurch sich eine umlaufende Stufe 15 ergibt. Hierauf wird weiter unten nochmals eingegangen.

Die Schwenkhülse 14 ist auf einen Armaturenkörper 16 gesteckt. Der Armaturenkörper 16 weist eine Bohrung 24 auf, so dass sich ein hohlzylinderförmiger oberer Abschnitt 16a des Armaturenkörpers 16 ergibt. Dieser Abschnitt 16a dient der Aufnahme einer Kartusche 26, welche die wassersteuernden Elemente enthält und über den Hebel 28 einstellbar ist. Die Kartusche 26 weist an ihrer Unterseite in bekannter Weise zwei Wasserzulauföffnungen und eine Mischwasserauslauföffnung auf.

Der untere Abschnitt 16b des Armaturenkörpers 16 ist von zwei Wasserzulaufkanälen und einem Verbindungskanal durchzogen, wobei in Figur 1 nur ein Wasserzulaufkanal 18 zu erkennen ist.

An einem äußeren Befestigungsabschnitt 20 der Wasserzulaufkanäle 18 ist jeweils ein Zuführrohr 22 in herkömmlicher Weise durch eine Gewindeverbindung mit Gummi-Ringdichtung angebracht.

Die oben genannten Wasserzulauföffnungen der Kartusche 26 kommunizieren mit den Wasserzulauföffnungen 18 im Armaturenkörper 16. Die Mischwasserauslauföffnung der Kartusche 26 steht mit dem Innenraum des Schwenkauslaufes 12 über den oben erwähnten Verbindungskanal im Armaturenkörper 16 mit einem Ringraum 40 zwischen dem Armaturenkörper 16 und der Schwenkhülse 14 in Verbindung.

Der Armaturenkörper 16 sitzt auf einem hohlzylindrischen Aufsatzteil 30, welches dem Anbringen der Sanitärarmatur 10 auf z.B. einem Spültisch dient.

Der Armaturenkörper 16 weist in seiner äußeren Mantelfläche zwei umlaufende Nuten 32, 34 auf, die jeweils eine O-Ring-Dichtung 36 bzw. 38 aufnehmen. Die Nuten 32, 34 und die O-Ringe 36, 38 sind ober- bzw. unterhalb des wasserführenden Ringraumes 40 angeordnet.

Der Armaturenkörper 16 besitzt außerdem in seiner äußeren Mantelfläche zwei umlaufende Ausnehmungen 42, 44, die der Aufnahme von Führungsringen 46, 48 dienen, welche nachfolgend ausführlicher beschrieben werden.

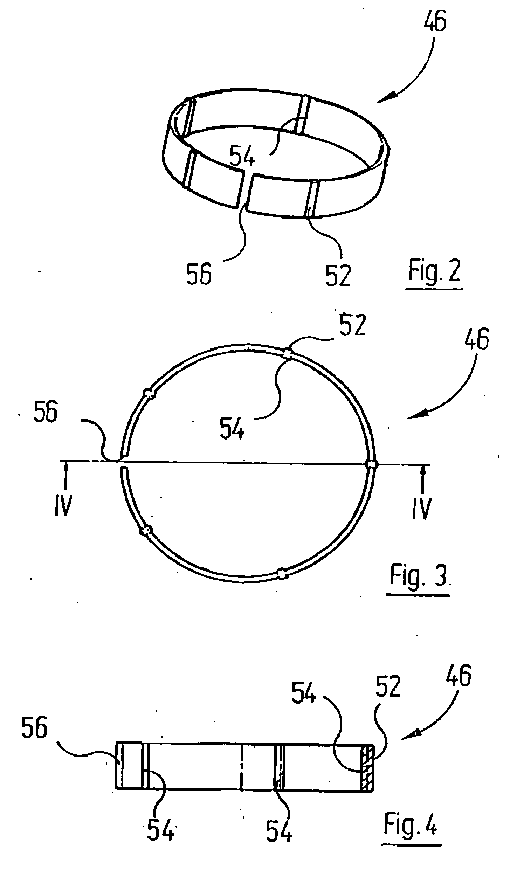

Zunächst wird auf die Figuren 2 bis 4 Bezug genommen, welche den oberen Führungsring 46 in einer perspektivischen Ansicht, in einer Aufsicht bzw. im Querschnitt zeigen.

Der Führungsring 46 weist sowohl an seiner äußeren als auch an seiner inneren Mantelfläche Materialerhebungen in Form von jeweils fünf radial vorstehenden, achsparallelen Rippen 52 bzw. 54 auf.

Der Führungsring 46 samt Materialerhebungen 52, 54 ist ein Spritzteil und besteht aus einem Kunstoff mit guten Gleiteigenschaften.

Der Führungsring 46 weist einen radialen Schlitz 56 auf, so dass er zum Aufbringen auf den Armaturenkörper 16 etwas aufgeweitet werden kann. Der Querschnitt des Ringes 46 entspricht im wesentlichen einem Rechteck, wie in Figur 4 zu erkennen ist.

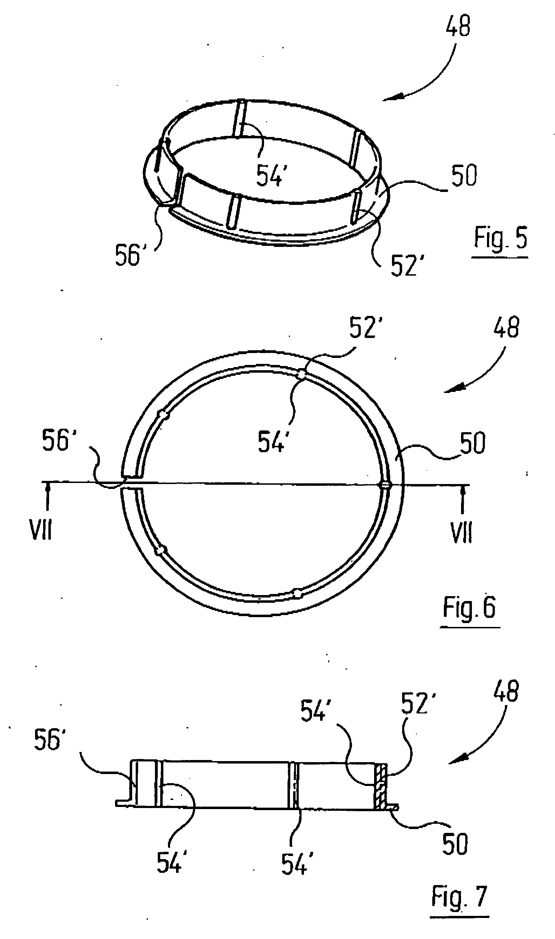

Die Figuren 5 bis 7 zeigen den unteren Führungsring 48 in einer perspektivischen Ansicht, in einer Aufsicht bzw. im Querschnitt. Der Führungsring 48 weist einen umlaufenden radial überstehenden Flansch 50 auf, woraus sich ein L-förmiger Querschnitt ergibt, wie in Figur 7 zu sehen ist. Ansonsten besitzt der Führungsring 48 dieselben Elemente wie der Führungsring 46. Diese sind in den Figuren 5 bis 7 mit denselben Bezugszeichen wie in den Figuren 2 bis 4, erweitert durch einen Strich, versehen. Der Führungsring 48 hat alle Eigenschaften und Charakteristika, die oben anhand des Führungsringes 46 beschrieben sind.

Wird nun die Schwenkhülse 14 auf den Armaturenkörper 16 gesteckt, legt sich ihre Innenmantelfläche an die O-Ringe 36, 38 an. Durch den Kontakt mit diesen wird der Zwischenraum zwischen der Innenmantelfläche der Schwenkhülse 14 und dem Armaturenkörper 16 ober- und unterhalb des Ringraumes 40 abgedichtet. Dadurch wird verhindert, dass Wasser aus dem Ringraum 40 in die Bereiche zwischen der inneren Mantelfläche der Schwenkhülse 14 und den Abschnitten 16a bzw. 16b des Armaturenkörpers treten kann.

Die Durchmesser der Führungsringe 46, 48 und die Höhen der Rippen 52, 52', 54, 54' sind so bemessen, dass sichergestellt ist, dass die inneren axialen Rippen 54, 54' dabei vollständig in linienhaftem Kontakt mit den Mantelflächen der Ausnehmungen 42 bzw. 44 bleiben und die äußeren Rippen 52, 52' an der Innenmantelfläche der Schwenkhülse 14 anliegen.

Die Führungsringe 46, 48 bilden Radiallager, die die Auslaufhülse 14 im wesentlichen koaxial zu dem Armaturenkörper 16 führen. Sie ermöglichen einen spielfreien Sitz der Schwenkhülse 14 auf dem Armaturenkörper 16 und gleichen Toleranzen bei der Verschwenkung des Schwenkauslaufes 12 aus. Zudem ermöglichen sie ein sehr leichtgängiges Verschwenken des Schwenkauslaufes 12.

Durch die axialen Rippen 52, 52', 54, 54' auf beiden Mantelflächen der Führungsringe 46, 48 sind die Gleitflächen der sich relativ zu dem Armaturenkörper 16 drehenden Schwenkhülse 14 sehr klein. Zudem macht es keinen Unterschied, ob die Schwenkhülse 14 über die äußeren Rippen 52, 52' der Führungsringe 46, 48 gleitet oder ob die Führungsringe 46, 48 sich mit der Schwenkhülse 14 drehen und dann die Innenrippen 54, 54' über die Außenmantelfläche des Armaturenkörpers 16 gleiten. Es gibt somit zwei Möglichkeiten, wie die Schwenkhülse 14 gegenüber dem Armaturenkörper 16 leichtgängig verschwenken kann. Fällt eine dieser Möglichkeiten - beispielsweise durch Verschmutzung - aus, so gewährleistet die andere Möglichkeit gleichwohl die Leichtgängigkeit des Schwenkauslaufes 12.

Wie der Figur 1 zu entnehmen ist, liegt der untere Führungsring 48 in der Ausnehmung 44 am unteren Ende des Armaturenkörpers 16. Die Stufe 15 der Schwenkhülse 14 sitzt auf dem Flansch 50 des Führungsringes 48. Dadurch gleitet die Stufe 15 der Schwenkhülse 14 bei Verschwenken des Schwenkauslaufes 12 auf dem Flansch 50 des Führungsringes 48. Dieser stellt somit zusätzlich ein axiales Lager bereit.

## Patentansprüche

1. Sanitärarmatur mit Schwenkauslauf (12) mit
a) einer Schwenkhülse (14), die Teil des Schwenkauslaufes (12) ist;
b) einem Armaturenkörper (16), auf den die Auslaufhülse (14) verschwenkbar aufsteckbar ist;
c) mindestens einem als Lager dienenden Führungsring (46, 48) zwischen der Schwenkhülse (14) und dem Armaturenkörper (16) bzw. einem damit verbundenen Teil, wobei der Führungsring (46, 48) an seiner äußeren Mantelfläche Materialerhebungen (52, 52') zur spielfreien Radiallagerung der Schwenkhülse (14) und zum leichtgängigen Schwenken bewegung des Schwenkauslaufs (12) aufweist,
**dadurch gekennzeichnet, dass**
d) Materialerhebungen (54, 54') auch an der inneren Mantelfläche des Führungsringes (46, 48) derart vorgesehen sind, dass die Schwenkhülse (14) bei einer Schwenkbewegung nicht über den Führungsring (46,48) gleitet, sondern diesen mitnimmt.

2. Sanitärarmatur nach Anspruch 1, **dadurch gekennzeichnet, dass** die Materialerhebungen (52, 52', 54, 54'), vorzugsweise der ganze Führungsring, aus gleitfähigem Material sind.

3. Sanitärarmatur nach Anspruch 1 oder 2, **dadurch gekennzeichnet, dass** es sich bei den Materialerhebungen (52, 52', 54, 54') um Rippen handelt.

4. Sanitärarmatur nach Anspruch 3, **dadurch gekennzeichnet, dass** die Rippen axial verlaufen.

5. Sanitärarmatur nach Anspruch 1 oder 2, **dadurch gekennzeichnet, dass** es sich bei den Materialerhebungen (52, 52', 54, 54') um diskrete Noppen handelt.

6. Sanitärarmatur nach Anspruch 4 oder 5, **dadurch gekennzeichnet, dass** der Führungsring (46, 48) einen radialen Schlitz (56, 56') aufweist.

7. Sanitärarmatur nach Anspruch 6, **dadurch gekennzeichnet, dass** der Führungsring (46) einen im wesentlichen rechteckigen Querschnitt hat.

8. Sanitärarmatur nach Anspruch 6, **dadurch gekennzeichnet, dass** der Führungsring (48) einen radial überstehenden Flansch (50) aufweist und sowohl als Radial- als auch als Axiallager dient.

9. Sanitärarmatur nach den Ansprüchen 7 und 8, **dadurch gekennzeichnet, dass** mindestens ein Führungsring (46) vorgesehen ist, der als Radiallager dient, und mindestens ein Führungsring (48) vorgesehen ist, der als Radial- und Axiallager dient, wobei die Führungsringe (46, 48) axial voneinander beabstandet sind.

## Claims

1. Sanitary fitting with swivelling spout (12), comprising
a) a swivelling sleeve (14) which forms part of the swivelling spout (12);
b) a fitting body (16) on which the swivelling sleeve (14) can be swivellably placed;
c) at least one guide ring (46, 48) serving as a bearing between the swivelling sleeve (14) and the fitting body (16) or a part connected thereto, which guide ring (46, 48) has on its external cylindrical face material projections (52, 52') for guiding the swivelling sleeve (14) radially without free play and for easy swivel movement of the swivelling spout (12).
**characterised in that**
d) material projections (54, 54') are also provided on the internal cylindrical face of the guide ring (46, 48) in such a manner that the swivelling sleeve does not slide over the guide ring (46, 48) in a swivelling movement, rather that it takes it with it.

2. Sanitary fitting according to claim 1, **characterised in that** the material projections (52, 52', 54, 54'), and preferably the entire guide ring, are made of slidable material.

3. Sanitary fitting according to claim 1 or 2, **characterised in that** the material projections (52, 52', 54, 54') are ribs.

4. Sanitary fitting according to claim 3, **characterised in that** the ribs are disposed axially.

5. Sanitary fitting according to claim 1 or 2, **characterised in that** the material projections (52, 52', 54, 54') are discrete bosses.

6. Sanitary fitting according to claim 4 or 5, **characterised in that** the guide ring (46, 48) has a radial slit (56, 56').

7. Sanitary fitting according to claim 6, **characterised in that** the guide ring (46) has a substantially rectangular cross-section.

8. Sanitary fitting according to claim 6, **characterised in that** the guide ring (48) has a radially projecting flange (50) which serves as both a radial and an axial bearing.

9. Sanitary fitting according to claims 7 and 8, **characterised in that** at least one guide ring (46) which serves as a radial bearing and at least one guide ring (48) which serves as a radial and axial bearing are provided, the guide rings (46, 48) being spaced axially from one another.

## Revendications

1. Appareil de robinetterie sanitaire à sortie pivotante (12), comprenant
a) un manchon pivotant (14), qui fait partie de la sortie pivotante (12) ;
b) un corps d'appareil de robinetterie (16), sur lequel le manchon de sortie (14) peut être emmanché à pivotement ;
c) au moins une bague de guidage (46, 48) servant de palier entre le manchon pivotant (14) et le corps d'appareil de robinetterie (16) ou une pièce assemblée à ce dernier, sachant que la bague de guidage (46, 48) présente sur sa surface d'enveloppe extérieure des élévations de matériau (52, 52') pour le montage radial sans jeu du manchon pivotant (14) et pour un mouvement de pivotement sans effort de la sortie pivotante (12),
**caractérisé en ce que**
d) des élévations de matériau (54, 54') sont également prévues sur la surface d'enveloppe intérieure de la bague de guidage (46, 48) de telle sorte que le manchon pivotant (14), lors d'un mouvement de pivotement, ne glisse pas sur la bague de guidage (46, 48) mais l'entraîne avec lui.

2. Appareil de robinetterie sanitaire selon la revendication 1, **caractérisé en ce que** les élévations de matériau (52, 52', 54, 54'), et de préférence la totalité de la bague de guidage, sont réalisées en un matériau permettant le glissement.

3. Appareil de robinetterie sanitaire selon la revendication 1 ou 2, **caractérisé en ce que** les élévations de matériau (52, 52', 54, 54') sont des nervures.

4. Appareil de robinetterie sanitaire selon la revendication 3, **caractérisé en ce que** les nervures s'étendent axialement.

5. Appareil de robinetterie sanitaire selon la revendication 1 ou 2, **caractérisé en ce que** les élévations de matériau (52, 52', 54, 54') sont des bossages discrets.

6. Appareil de robinetterie sanitaire selon la revendication 4 ou 5, **caractérisé en ce que** la bague de guidage (46, 48) présente une fente radiale (56, 56').

7. Appareil de robinetterie sanitaire selon la revendication 6, **caractérisé en ce que** la bague de guidage (46) présente une section essentiellement rectangulaire.

8. Appareil de robinetterie sanitaire selon la revendication 6, **caractérisé en ce que** la bague de guidage (48) présente un collet (50) dépassant radialement et sert à la fois de palier radial et de palier axial.

9. Appareil de robinetterie sanitaire selon les revendications 7 et 8, **caractérisé en ce qu'**il est prévu au moins une bague de guidage (46) qui sert de palier radial et au moins une bague de guidage (48) qui sert de palier radial et axial, sachant que les bagues de guidage (46, 48) sont axialement distantes l'une de l'autre.
